# EUROPÄISCHE PATENTANMELDUNG

(11) **EP 3 329 765 A1**
(43) Veröffentlichungstag der Anmeldung: **06.06.2018**
(21) Anmeldenummer: 17202918.3
(22) Anmeldetag: 21.11.2017
(51) Int. Cl.: A01F 29/06, A01F 29/09

(54) **HÄCKSELMESSER EINER HÄCKSELTROMMEL EINES FELDHÄCKSLERS**

(30) Priorität: 30.11.2016 DE 102016123174
(71) Anmelder: CLAAS Saulgau GmbH, 88348 Bad Saulgau (DE)
(72) Erfinder: Birkhofer, Stefan, 78333 Stockach (DE); Kajtar, Peter, 88348 Bad Saulgau (DE)

(57) **Zusammenfassung**

Häckselmesser (10) einer Häckseltrommel eines Feldhäckslers, mit einem Grundkörper (11), der einen Befestigungsabschnitt (12) zur Befestigung des Häckselmessers (10) an der Häckseltrommel und einen Schneidabschnitt (13) für zu häckselndes Erntegut aufweist, wobei an der Innenseite des Befestigungsabschnitts (12) mindestens ein Gutleitelement (15) zur Führung des Ernteguts befestigt ist.

## Beschreibung

Die Erfindung betrifft ein Häckselmesser einer Häckseltrommel eines Feldhäckslers.

Aus der DE 199 18 553 A1 ist eine Häckseltrommel eines Feldhäckslers mit Häckselmessern bekannt. Die Häckselmesser sind über Messerhalter an der Häckseltrommel befestigt, wobei die Messerhalter über den Trommelmantel der Häckseltrommel verteilt sind. Die Messerhalter der Häckselmesser bilden an einer Seite eine konkav gewölbte Wurfschaufelfläche aus, die sowohl für das Werfen von Häckselteilchen als auch für ein pneumatisches Fördern von Vorteil ist. Diese Wurfschaufelfläche dient demnach als Führungsfläche für das gehäckselte Erntegut und demnach als Gutleitelement. Bei der aus der DE 199 18 553 A1 bekannten Häckseltrommel werden demnach die Funktion der Befestigung der Häckselmesser an der Häckseltrommel sowie die Gutleitfunktion zur Führung von gehäckseltem Erntegut gemeinsam durch die Messerhalter bereitgestellt, sodass hier demnach eine Funktionsintegration der Befestigungsfunktion und der Gutleitfunktion in den Messerhaltern vorliegt.

Hiervon ausgehend liegt der vorliegenden Erfindung die Aufgabe zugrunde, ein neuartiges Häckselmesser einer Häckseltrommel eines Feldhäckslers zu schaffen.

Diese Aufgabe wird durch ein Häckselmesser einer Häckseltrommel eines Feldhäckslers nach Anspruch 1 gelöst.

Erfindungsgemäß ist an dem Befestigungsabschnitt des Häckselmessers mindestens ein Gutleitelement zur Führung des Ernteguts befestigt.

Beim erfindungsgemäßen Häckselmesser werden die Befestigungsfunktion für das Häckselmesser an der Häckseltrommel sowie die Gutleitfunktion zur Führung des Ernteguts nicht von ein und demselben Bauelement übernommen, vielmehr sind diese Funktionen auf unterschiedliche Baugruppen des Häckselmessers verteilt.

So verfügt das erfindungsgemäße Häckselmesser über den Grundkörper, der die Befestigungsfunktion für das Häckselmesser an der Häckseltrommel bereitstellt und der dem Schneiden des Ernteguts dient. Ferner umfasst das Häckselmesser mindestens ein am Befestigungsabschnitt befestigtes Gutleitelement zur Bereitstellung der Führungsfunktion für das Erntegut. Dies verfügt über den Vorteil, dass die einzelnen Baugruppen des Häckselmessers auf ihre jeweilige Funktion hin optimal ausgelegt werden können. So können z.B. optimal angepasste Werkstoffe für diese Baugruppen des Häckselmessers gewählt werden. Ferner ist es möglich, Gutleitelemente auszutauschen oder auch bei Verschleiß des Grundkörpers die Gutleitelemente wiederzuverwenden. Ferner kann das erfindungsgemäße Häckselmesser einfach hergestellt werden.

Nach einer Weiterbildung ist das jeweilige Gutleitelement ein Hohlkörper. Hiermit kann das Häckselmesser mit geringem Gewicht ausgeführt werden.

Nach einer Weiterbildung ist das jeweilige Gutleitelement mit dem Grundkörper durch eine Nietverbindung oder eine Schraubverbindung oder eine Klebverbindung oder eine Spritzgussverbindung oder eine Druckgussverbindung verbunden. Dies erlaubt eine einfache Herstellung des erfindungsgemäßen Häckselmessers.

Ein erfindungsgemäßes Gutleitelement ist vorzugsweise bleibend an der Innenseite des Befestigungsabschnitts eines vorzugsweise schaufelförmigen Häckselmessers fixiert. Die Innenseite des Befestigungsabschnitts ist die Seite, die zur Häckseltrommel hin ausgerichtet ist und mit der der Befestigungsabschnitt an der Häckseltrommel anliegt, wobei zwischen der Häckseltrommel und dem Befestigungsabschnitt Halterungselemente angeordnet sein können. Ein erfindungsgemäßes Gutleitelement leitet abgeschnittene Erntegutteile, welche durch das mit dem Gutleitelement verbundene Häckselmesser von einem zugeführten Erntegutstrom abgeschnitten wurden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigen:
- Fig. 1: eine perspektivische Ansicht eines ersten Ausführungsbeispiels eines erfindungsgemäßen Häckselmessers;
- Fig. 2: eine Seitenansicht des Häckselmessers der Fig. 1;
- Fig. 3: eine perspektivische Ansicht eines zweiten Ausführungsbeispiels eines erfindungsgemäßen Häckselmessers;
- Fig. 4: eine perspektivische Ansicht eines dritten Ausführungsbeispiels eines erfindungsgemäßen Häckselmessers;
- Fig. 5: eine weitere perspektivische Ansicht des Häckselmessers der Fig. 4; und
- Fig. 6: eine Seitenansicht des Häckselmessers der Fig. 4 und 5.

Die Erfindung betrifft ein Häckselmesser einer Häckseltrommel eines Feldhäckslers eines Feldhäckslers.

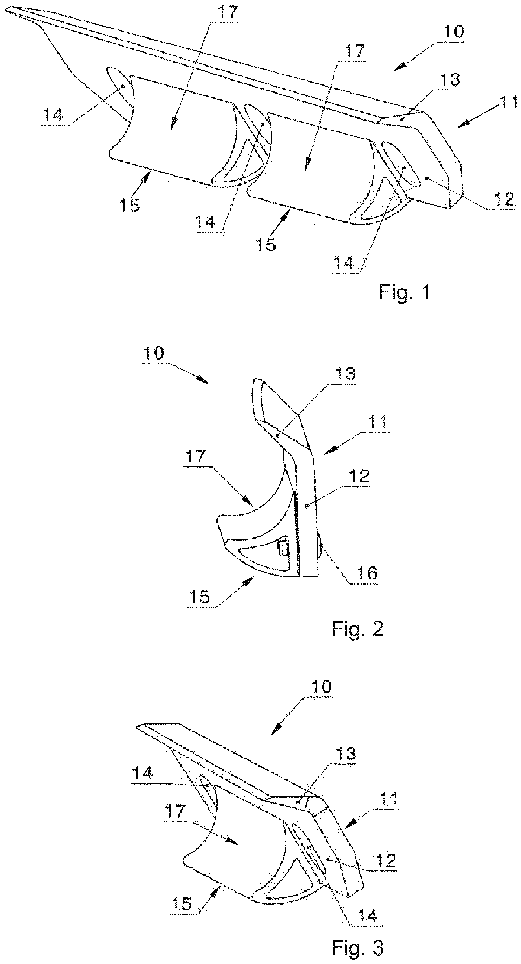

Fig. 1 und 2 zeigen unterschiedliche Ansichten eines ersten Ausführungsbeispiels eines erfindungsgemäßen Häckselmessers 10. Das erfindungsgemäße Häckselmesser 10 verfügt über einen Grundkörper 11 mit einem Befestigungsabschnitt 12 zur Befestigung des Häckselmesser 10 an einer nicht gezeigten Häckseltrommel sowie mit einem Schneidabschnitt 13 zum Schneiden des zu häckselnden Ernteguts. Gemäß dem gezeigten, bevorzugten Ausführungsbeispiel ist der Schneidabschnitt 13 des Grundkörpers 11 gegenüber dem Befestigungsabschnitt 12 desselben abgewinkelt.

Am Befestigungsabschnitt 12 sind im Ausführungsbeispiel der Fig. 1 und 2 drei als Langlöcher ausgebildete Befestigungselemente 14 ausgebildet, über die letztendlich das Häckselmesser 10, nämlich der Grundkörper 11 desselben, an der Häckseltrommel befestigt werden kann, nämlich über Befestigungsschrauben, die sich durch die als Langlöcher ausgebildeten Befestigungselemente 14 hindurch in die Häckseltrommel hinein erstrecken.

Neben dem Grundkörper 11 weist das Häckselmesser 10 mindestens ein Gutleitelement 15 auf. Zwischen jeweils zwei voneinander beabstandeten Befestigungselementen 14 ist jeweils ein Gutleitelement 15 angeordnet, sodass demnach im Ausführungsbeispiel der Fig. 1 und 2 zwei Gutleitelemente 15 vorhanden sind, die am Befestigungsabschnitt 12 des Grundkörpers 11 befestigt sind, nämlich im Ausführungsbeispiel der Fig. 1 und 2 über als Niete ausgebildete Befestigungsmittel 16.

Das jeweilige Gutleitelement 15 weist an einer dem Schneidabschnitt 13 des Grundkörpers 11 zugewandten Führungsfläche 17 eine konkave und demnach nach innen gewölbte Konturierung auf, die der Führung des Ernteguts, nämlich des gehäckselten Ernteguts, dient.

Beim erfindungsgemäßen Häckselmesser 10 werden demnach die Befestigungsfunktion für das Häckselmesser 10 an der Häckseltrommel sowie die Schneidfunktion für das Erntegut vom Grundkörper 11 bereitgestellt. Die Führungsfunktion für das Erntegut wird von mindestens einem Gutleitelement 17 bereitgestellt, welches als separate Baugruppe ausgeführt ist und mit dem Grundkörper 11 verbunden ist, nämlich in Fig. 1 und 2 über eine Nietverbindung durch die Niete 16.

Es liegt demnach im Sinne der hier vorliegenden Erfindung, die Befestigungsfunktion sowie die Schneidfunktion von der Führungsfunktion zu trennen und auf miteinander verbundene Baugruppen des Häckselmessers 10 zu verteilen, nämlich die Befestigungsfunktion und die Schneidfunktion auf den Grundkörper 11 des Häckselmessers 10 und die Führungsfunktion für das Erntegut auf das oder jedes Gutleitelement 15 des Häckselmessers 10. Hierdurch können die einzelnen Baugruppen des Häckselmessers 10 optimal auf ihre jeweilige Funktion ausgelegt werden, insbesondere durch die Wahl eines geeigneten Werkstoffs.

So ist der Grundkörper 11 vorzugsweise aus einem metallischen Werkstoff gefertigt, vorzugsweise aus einem Stahlwerkstoff.

Das oder jedes Gutleitelement 15 kann ebenfalls aus einem metallischen Werkstoff gefertigt sein, so zum Beispiel aus einem Aluminiumwerkstoff, Zinkwerkstoff oder auch Magnesiumwerkstoff. Alternativ kann das oder jedes Gutleitelement 15 auch aus einem Kunststoff gefertigt sein.

Im Ausführungsbeispiel der Fig. 1 und 2 ist das jeweilige Gutleitelement 15 als Hohlkörper ausgeführt. Dies ist bevorzugt, um ein Häckselmesser 10 mit geringem Gewicht bereitzustellen.

Es ist auch möglich, das Gutleitelement 15 als Voll körper auszuführen.

Im Ausführungsbeispiel der Fig. 1 und 2 ist das jeweilige Gutleitelement 15 am Grundkörper 11 des Häckselmessers 10 über eine Nietverbindung verbunden. Alternativ kann auch eine Schraubverbindung oder eine Klebeverbindung oder eine Druckgussverbindung zum Einsatz kommen.

Fig. 3 zeigt ein zweites Ausführungsbeispiel eines erfindungsgemäßen Häckselmessers 10, welches sich vom Ausführungsbeispiel der Fig. 1 und 2 lediglich dadurch unterscheidet, dass dasselbe im Bereich des Befestigungsabschnitts 12 des Grundkörpers 11 lediglich zwei als Langlöcher ausgebildete Befestigungselemente 14 aufweist, sowie dadurch, dass am Befestigungsabschnitt 12 des Grundkörpers 11 zwischen diesen beiden Befestigungselementen 14 ein einziges Gutleitelement 15 positioniert und montiert ist. Hinsichtlich aller übrigen Details stimmt das Ausführungsbeispiel der Fig. 3 mit dem Ausführungsbeispiel der Fig. 1 und 2 überein.

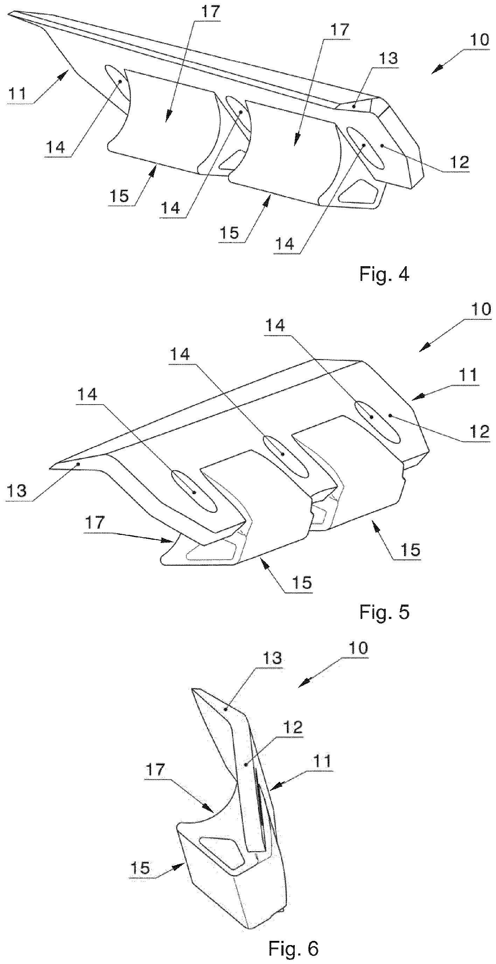

Ein drittes Ausführungsbeispiel eines erfindungsgemäßen Häckselmessers 10 zeigen Fig. 4 bis 6. Beim Häckselmesser 10 der Fig. 4 bis 6 handelt es sich bei den Gutleitelementen 15 um Gutleitelemente aus einem Kunststoff, die vorzugsweise über eine Spritzgussverbindung mit dem Befestigungsabschnitt 12 des Grundkörpers 11 des Häckselmessers 10 verbunden sind.

So kann insbesondere Fig. 5 und 6 entnommen werden, dass der Befestigungsabschnitt 12 im Bereich jedes Gutleitelements 15 an beiden Seiten vom jeweiligen Gutleitelement 15 umschlossen ist, wobei diese Verbindung alternativ zu einer Spritzgussverbindung auch über eine Klebeverbindung bereitgestellt sein kann.

Auch die Gutleitelemente 15 des Ausführungsbeispiels der Fig. 4 bis 6 sind als Hohlkörper ausgeführt.

Ein erfindungsgemäßes Häckselmesser 10 besteht demnach aus dem Grundkörper 11, der den Befestigungsabschnitt 12 sowie den Schneidabschnitt 13 bereitstellt, wobei dieser Grundkörper 11 vorzugsweise aus einem gehärteten Stahlwerkstoff gefertigt ist. Der Befestigungsabschnitt 12 dient der Befestigung an der Häckseltrommel. Am Befestigungsabschnitt 12 des Grundkörpers 11 ist mindestens ein Gutleitelement 15 befestigt, welches vorzugsweise aus einem anderen Werkstoff gefertigt ist als Grundkörper 11, insbesondere aus einem leichteren Werkstoff, wie einem Aluminiumwerkstoff oder auch einem Kunststoff. Das oder jedes Gutleitelement 15 übernimmt ausschließlich die Funktion der Gutführung des Ernteguts und dient nicht der Befestigung des Häckselmessers 10 an der Häckseltrommel.

Vorzugsweise sind die Gutleitelemente 15 als Hohlkörper ausgeführt, alternativ können dieselben aber auch als Vollkörper ausgestaltet sein.

Die Verbindung des oder jedes Gutleitelements 15 mit dem Befestigungsabschnitt 12 des Grundkörpers 11 kann durch Umspritzen, durch Verkleben, über eine Nietverbindung oder auch über eine Schraubverbindung erfolgen. Beim Umspritzen kann abhängig vom Werkstoff des jeweiligen Gutleitelements 15 entweder ein Kunststoff-Verbundspritzguss oder ein Aluminium-Druckguss genutzt werden, um den Befestigungsabschnitt 12 des Grundkörpers 11 im Bereich des jeweiligen Gutleitelements 15 abschnittsweise mit dem jeweiligen Gutleitelement 15 zu umspritzen.

Die Erfindung stellt eine Vielzahl von Vorteilen bereit. Durch die Trennung der Funktion der Gutführung von der Schneidfunktion und der Befestigungsfunktion können die einzelnen Baugruppen, die die jeweiligen Funktionen übernehmen, optimal auf die jeweilige Funktion hin ausgelegt werden. Der Grundkörper 11 kann einfach und kostengünstig hergestellt werden, ebenso das jeweilige Gutleitelement 15, welches aus einem weicheren und leichteren Material hergestellt werden kann. Durch Austausch der Gutleitelemente 15 kann die Führungsfunktion für das Erntegut geändert werden, insbesondere durch Verwendung von Gutleitelementen 15 mit unterschiedlichen Konturen im Bereich der dem Schneidabschnitt 13 zugewandten Führungsfläche 17. Im Verschleißfall des Grundkörpers 11 können die Gutleitelemente 15 wiederverwendet werden. Ein ggf. höherer Verschleiß am weicheren Werkstoff des jeweiligen Gutleitelements 15 kann entsprechend vorgehalten werden. Durch Verschleiß wandert die Form über den Nutzungszeitraum des Häckselmessers 10. Somit wird auch bei abgeschliffenem Schneidabschnitt 13 und abgenutztem Gutleitelement 15 ausreichend Platz für das Erntegut, nämlich für die Führung desselben bereitgestellt.

### Bezugszeichenliste

- 10: Häckselmesser
- 11: Grundkörper
- 12: Befestigungsabschnitt
- 13: Schneidabschnitt
- 14: Befestigungselement
- 15: Gutleitelement
- 16: Befestigungsmittel
- 17: Führungsfläche

## Patentansprüche

1. Häckselmesser (10) einer Häckseltrommel eines Feldhäckslers,
mit einem Grundkörper (11), der einen Befestigungsabschnitt (12) zur Befestigung des Häckselmessers (10) an der Häckseltrommel und einen Schneidabschnitt (13) für zu häckselndes Erntegut aufweist,
**dadurch gekennzeichnet, dass**
an der Innenseite des Befestigungsabschnitts (12) mindestens ein ausschließlich zur Führung des Ernteguts vorgesehenes Gutleitelement (15) befestigt ist.

2. Häckselmesser nach Anspruch 1, **dadurch gekennzeichnet, dass** der Befestigungsabschnitt (12) mindestens zwei voneinander beabstandete Befestigungselemente (14) aufweist, wobei zwischen jeweils zwei benachbarten Befestigungselementen (14) jeweils ein Gutleitelement (15) positioniert ist.

3. Häckselmesser nach Anspruch 1 oder 2, **dadurch gekennzeichnet, dass** das jeweilige Gutleitelement (15) an einer dem Schneidabschnitt (13) zugewandten Führungsfläche (17) konkav konturiert ist.

4. Häckselmesser nach einem der Ansprüche 1 bis 3, **dadurch gekennzeichnet, dass** das jeweilige Gutleitelement (15) ein Hohlkörper ist.

5. Häckselmesser nach einem der Ansprüche 1 bis 4, **dadurch gekennzeichnet, dass** das jeweilige Gutleitelement (15) und der Grundkörper (11) aus unterschiedlichen Werkstoffen gefertigt sind.

6. Häckselmesser nach Anspruch 5, **dadurch gekennzeichnet, dass** der Grundkörper (11) aus einem Stahlwerkstoff gefertigt ist.

7. Häckselmesser nach Anspruch 5 oder 6, **dadurch gekennzeichnet, dass** das jeweilige Gutleitelement (11) aus einem Aluminiumwerkstoff oder einem Kunststoff gefertigt ist.

8. Häckselmesser nach einem der Ansprüche 1 bis 7, **dadurch gekennzeichnet, dass** das jeweilige Gutleitelement (15) mit dem Grundkörper (11) durch eine Nietverbindung oder eine Schraubverbindung verbunden ist.

9. Häckselmesser nach einem der Ansprüche 1 bis 8, **dadurch gekennzeichnet, dass** das jeweilige Gutleitelement (15) mit dem Grundkörper (11) durch eine Klebeverbindung oder eine Spritzgussverbindung oder eine Druckgussverbindung verbunden ist.

10. Häckselmesser nach einem der Ansprüche 1 bis 9, **dadurch gekennzeichnet, dass** der Schneidabschnitt (13) gegenüber dem Befestigungsabschnitt (12) abgewinkelt ist.
